# EUROPEAN PATENT APPLICATION

(11) **EP 4 574 284 A1**
(43) Date of publication of application: **25.06.2025**
(21) Application number: 24221727.1
(22) Date of filing: 19.12.2024
(51) Int. Cl.: B08B 7/00

(54) **CLEANING STATION FOR REMOVING SURFACE IMPURITIES, IN PARTICULAR FERROUS PARTICLES, FROM THE SURFACE OF A MAGNETIC ROTOR**

(30) Priority: 21.12.2023 IT 202300027648
(71) Applicant: FERRARI S.p.A., 41100 Modena (IT)
(72) Inventor: BIAGINI, Alessandro, 41100 MODENA (IT); FARETRA, Marco, 41100 MODENA (IT); BASSI, Gino, 41100 MODENA (IT)
(74) Representative: Studio Torta S.p.A.

(57) **Abstract**

A cleaning station **(6)** for removing surface impurities from the surface **(4)** of a cylindrical magnetic rotor **(1)** having an axis (A); the cleaning station (6) comprises: a seat (11) for housing the magnetic rotor (1) in a rotatable manner about its axis (A); a first pin (14) having an axis (A') parallel to the axis (A) of the magnetic rotor (1) when housed in the seat (11), wherein the first pin (14) is rotatable about its axis (A') and supports a roll (16) of adhesive tape (17); a second pin (15) having an axis (A'') parallel to the axis (A') for the first pin (14); wherein the second pin (15) receives an initial unwinding end of the roll (16) of adhesive tape (17) supported on the first pin (14) and is rotatable about its axis (A'') to progressively wind the adhesive tape (17) about its axis (A'') during unwinding from the first pin (14) ; a motorization for commanding the unwinding of the adhesive tape (17) from the first pin (14) and the winding of the adhesive tape (17) on the second pin (15); a pusher device (18) configured to press the adhesive tape (17) as it passes from the first (14) and to the second pin (15) against the magnetic rotor (1) housed in the seat (11) so that by dragging, the motion of the adhesive tape (17) commands the rotation of the magnetic rotor (1) about its axis (A) and the surface impurities on the magnetic rotor (1) migrate from the magnetic rotor (1) to the adhesive tape (17) remaining attached on the adhesive of the adhesive tape (17).

## Description

### CROSS-REFERENCE TO RELATED APPLICATIONS

This patent application claims priority from Italian patent application no. 102023000027648 filed on December 21, 2023, the entire disclosure of which is incorporated herein by reference.

### TECHNICAL FIELD

The technical field of the present invention relates to that of stations for the surface cleaning of cylindrical magnetic rotors. Due to the magnetic field generated by these particular rotors, the ferrous particles are spontaneously attracted and forcibly retained on their surface. This attraction that the rotor exerts on the ferrous particles deposited on the surface makes their removal or distancing difficult. However, in some particular use applications of magnetic rotors, for example the application in sports road vehicles as an element dedicated to electric propulsion, the surface of the magnetic rotors must be as clean as possible. In this context, the present invention will address the problem of how to offer an innovative cleaning station for these components in order to achieve a better result relative to the currently known solutions used for such a purpose.

### PRIOR ART

As indicated in the previous section, the present invention relates to a station for cleaning the surface of a cylindrical-shaped magnetic rotor, where cylindrical is intended as a solid of revolution. By its nature, the magnetic rotor generates a magnetic field that attracts ferrous or similar particles that remain forcibly constrained on the surface of the rotor itself. Currently the industrial washes known for cleaning these rotors fail to remove such particles. In fact, the traditional washes available today can remove non-magnetic material and organic substances from the rotor surface but cannot remove the ferrous particles that remain attracted to the magnet. Even using high pressure washes, a satisfactory result is not obtained because the ferrous particles are not removed from the surface of the rotor but only undergo a displacement on the surface.

### DESCRIPTION OF THE INVENTION

The main object of the present invention is therefore to provide an innovative cleaning station for the outer surface of cylindrical magnetic rotors having an axis A in order to remove the ferrous particles forcibly retained on the surface of such rotors.

A cleaning station according to the present invention comprises:
- a seat, or housing, configured to house the magnetic rotor during the loading, cleaning and unloading steps, wherein the seat is further configured to allow the rotor to rotate about its axis A (in fact, the cleaning will take place with the rotor rotating);
- a first support pin having an axis A' parallel to the axis A of the magnetic rotor when housed in the seat, wherein the first support pin is rotatable (idle or motorized) about its axis A' and is configured to support (in a selectively free and integral manner) a roll of adhesive tape;
- a second support pin having an axis A" parallel to the axis A' of the first support pin; wherein the second support pin is configured to receive an initial unwinding end of the roll of adhesive tape supported on the first support pin and is rotatable (idle or motorized) about its axis A" (by dragging or by dedicated motorization) to progressively wind the adhesive tape about its axis A" during unwinding from the first support pin;
- at least one motorization configured to command the unwinding of the adhesive tape from the first pin and the winding on the second pin (and eventually the rewinding on the first pin);
- a pusher device configured to press the adhesive tape as it passes from the first and to the second support pin against the magnetic rotor housed in the seat so that by dragging (or in a motorized manner), the motion of the adhesive tape commands the rotation of the magnetic rotor about its axis A and the surface impurities on the magnetic rotor migrate from the magnetic rotor to the adhesive tape, remaining attached on the adhesive of the adhesive tape.

Therefore, according to the present invention, the rotor is cleaned with a rotating rotor and with an adhesive tape wherein the adhesive layer is pressed on the rotor during the passage from the first to the second pin.

Preferably, the pusher device comprises a pusher belt which is deferred in a closed loop between two rollers with axes parallel to the axis A of the magnetic rotor when housed in the seat. The rollers are rotatable about their axes (idle or by motorization) and are arranged respectively upstream and downstream of the magnetic rotor when housed in the seat so that a deflection branch of the pusher tape contacts the adhesive tape exiting the first pin upstream of the magnetic rotor, presses the adhesive tape against the magnetic rotor and after passing on the rotor releases the adhesive tape towards the second pin.

Preferably, the rollers are toothed rollers and the pusher tape is a belt.

The motorization configured to command the unwinding of the adhesive tape from the first pin and the winding on the second pin can comprise one or more motors, in particular the motorization of the station can be made so as to comprise:
- a first motor coupled to the second support pin configured to rotate the second pin along a winding direction of the tape on the second pin (in this case the rotation motion of the first pin can be dragging); and/or
- a second motor coupled to the first support pin configured to rotate the first pin along a rewinding direction of the tape on the first pin (in this case the rotation motion of the second pin can be dragging); and/or
- a third motor coupled to one of the deferred rollers for pusher tape configured to command the motion of the pusher tape (in this case the rotation motion of the pins can be dragging).

Preferably, the pusher tape and deferred rollers are housed on a movable slide relative to the housing seat of the rotor to vary the pressure to be exerted on the magnetic rotor and to allow housing magnetic rotors with different diameters in the seat. Even more preferably, the seat is configured to house the rotor so that it has its axis in a horizontal plane and the slide housing the pusher tape is movable along the vertical direction orthogonal to the axis of the rotor.

Preferably, the rotor housing seat is movable along an axis that coincides with the axis A of the rotor when it is housed in the seat so as to provide a first rotor loading position wherein the seat is not at the adhesive tape passage area to one or more working positions wherein the adhesive tape is at different portions of the magnetic rotor (so that the cleaning occurs in steps along the rotor axis).

Preferably, the first support pin is an expansion pole configured to go from a first lower pining diameter of the roll of adhesive tape, to a second larger diameter wherein expanding, it integrally constrains the roll of the adhesive tape to itself.

From a structural point of view, the elements described so far are preferably supported by a self-supporting frame made of paramagnetic or non-magnetic material. The electrical elements whose operation could be compromised by the magnetic field of the rotor are positioned in a dedicated electrical cabinet outside the frame at its rear.

Preferably, the frame defines a working area, that in which the adhesive tape transits and in which the pusher is provided, protected by movable hatches to allow the roll of adhesive tape to be loaded or replaced on the first pin.

Preferably, an optical device or sensor for controlling the adhesive tape is provided after the passage on the magnetic rotor, wherein the optical device or sensor is configured to monitor the presence of impurities on the adhesive of the adhesive tape. A control unit is thus provided connected to the optical device so that the cleaning of the rotor has a duration depending on what is measured by the optical device or sensor on the tape. In particular, the adhesive tape will continue to proceed in contact with the rotor as long as the optical device or sensor continues to detect the presence of magnetic particles that have migrated from the rotor to the adhesive tape. Only in the absence of magnetic particles on the adhesive tape is the cleaning cycle interrupted.

Preferably, the station comprises at least one sensor configured to detect the status of the unwinding of the adhesive tape from the first pin. This sensor is connected to signaling devices for replacing the roll of adhesive tape when it is about to end. Preferably, the aforesaid sensor can be used to command the rewinding of the adhesive tape on the first pin upon complete unwinding.

Preferably, the housing seat comprises two opposing receiving heads of the lateral ends (pins) of the rotor, wherein the heads are switchable in a plurality of configurations to house ends of the rotors of different sizes.

Preferably, the station comprises a device for controlling the positioning of the rotor in the seat; in such a case, a control unit connected to such a device is provided so in case of incorrect positioning or a different rotor, the operation of the station is inhibited.

Preferably, the station comprises a selective locking device of the rotor in the seat operating at the end of cleaning so that the lifting by dragging of the rotor is prevented when lifting the adhesive tape.

Preferably, the station comprises a bar code reader to read a code shown on the roller to be cleaned; in this case a control unit is provided connected to the reader so that the station automatically provides its setting according to the code read by the reader, or by the correct program and set-up input carried out by the operator.

### LIST OF FIGURES

The present invention will now be described with reference to the accompanying drawings, which illustrate some non-limiting example embodiments thereof, wherein:
- Figure 1 is a schematic view of some examples of cylindrical magnetic rotors that can be cleaned thanks to the station of the present invention;
- Figures 2 and 3 are schematic views of an example embodiment of a cleaning station according to the present invention in two different times of use;
- Figure 4 shows an example embodiment of a component of the station of the previous figures;
- Figure 5 shows a variant of the components of Figure 4;
- Figure 6 shows how some components of the station of the present invention cooperate to achieve the intended object;
- Figures 7 and 8 are schematic views of some elements of Figure 6.

### PREFERRED EMBODIMENTS OF THE INVENTION

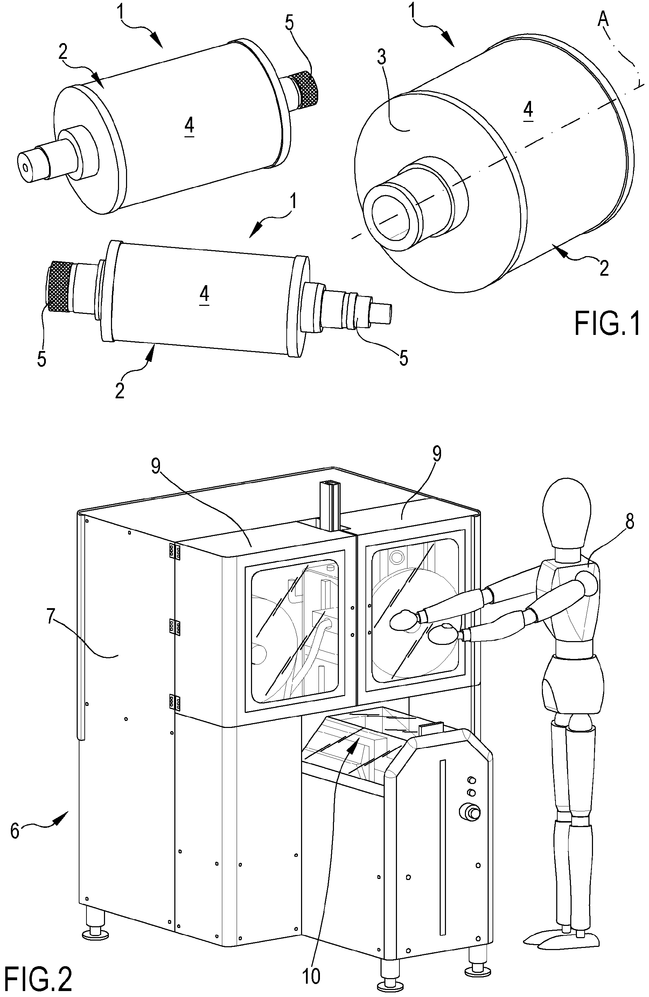

With reference to Figure 1, such a figure shows a schematic view of some examples of cylindrical magnetic rotors that can be cleaned thanks to the station of the present invention. As can be seen, each rotor 1 comprises a cylindrical body 2 with two opposite circular bases or discs 3 and a cylindrical magnetic surface 4. Each rotor has a main axis A and support pins 5 protrude from the bases along such an axis. These rotors generate a strong magnetic field that, acting like a magnet, retain impurities such as ferrous particles on the surface 4.

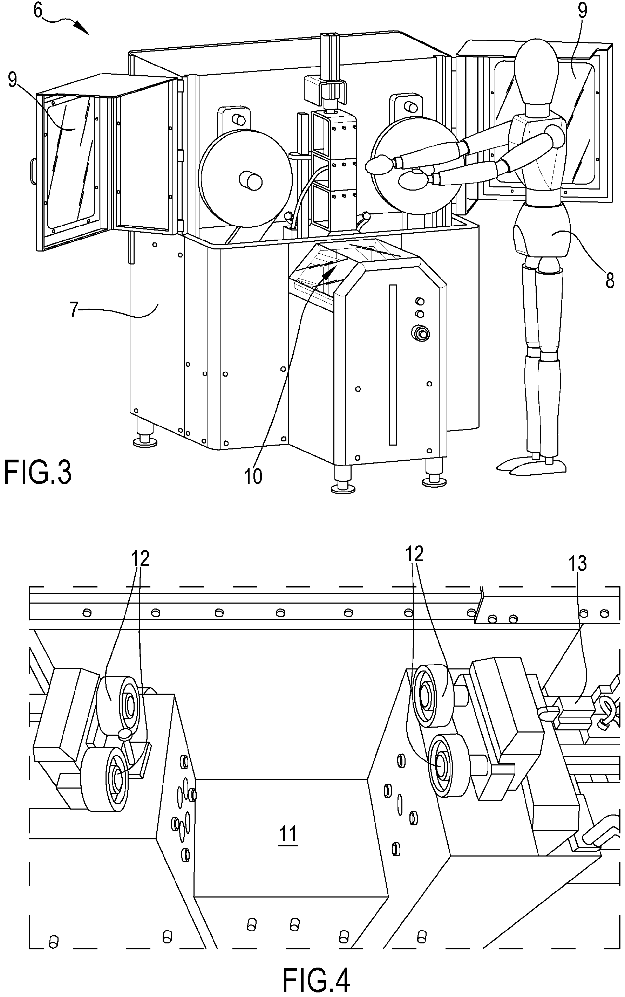

To optimally remove such particles, the present invention relates to an innovative cleaning station which is shown according to a schematic example in Figures 2 and 3 in two different modes of use. In these figures, the station 6 comprises a self-supporting frame structure 7 (of the cabin type) preferably made of a non-magnetic or paramagnetic material (e.g., aluminium) so that the magnetic field of the rotor does not influence the structure. The electronic components have been protected because they were housed outside the frame in its rear portion. In the example of Figure 2, an operator 8 is shown who can monitor the steps of use of the station by looking through windows or hatches 9 inside which the components that operate the cleaning of the rotor are housed. The reference numeral 10 identifies a further movable hatch placed cantilevered from the frame 7 that allows the operator to reach the rotor loading and unloading area. As will be described, under the hatch 10 there is the rotor receiving seat which can translate from a loading position, substantially outside the cabinet where loading can also occur by means of a hoist, to a working position wherein the rotor is inside the station and visible from the hatches 9. Both the hatches 9 and the hatch 10 are sensorized so that only in the event of correct closure can the station be operated. Figure 3 shows the station 6 with the hatches 9 open. Such an opening allows the user to access inside the station to periodically load and replace the element that physically cleans the rotor surface, i.e., an adhesive tape initially loaded as a new roll.

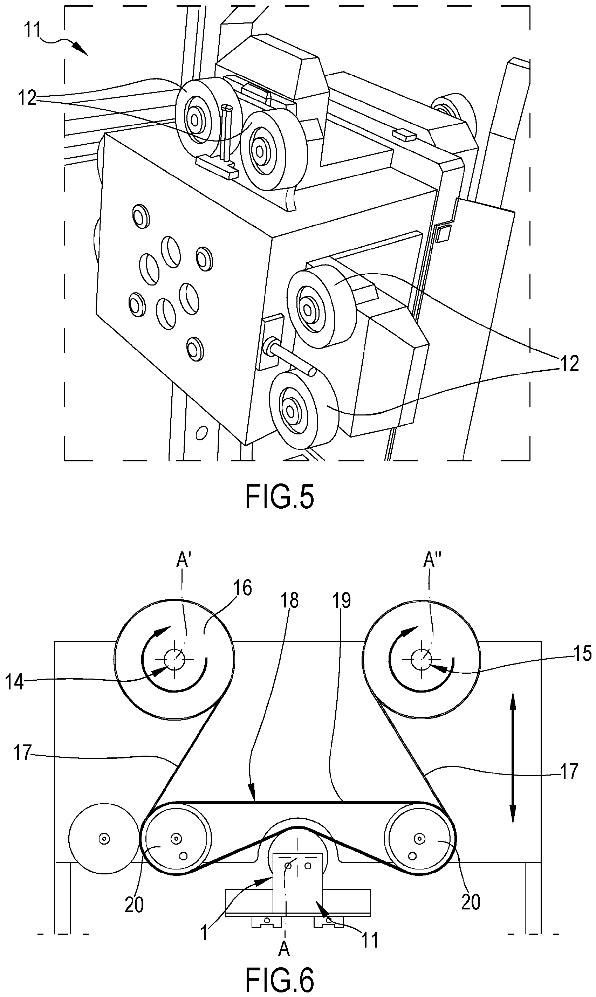

Before going into the details of cleaning the rotor, Figures 4 and 5 show some details of examples of the rotor loading and housing area. As can be seen in Figure 4, the loading area, i.e., that which is protected by the hatch 10, comprises the housing seat 11 of the rotor configured to house the rotor with its axis A substantially horizontal. To this end, the ends of the seat 11 comprise receiving devices in the form of two facing rollers 12 between which the support pins of the rotors are arranged. The rollers 12 are configured to allow the rotor to rotate about its axis A. Finally, in Figure 4, the reference numeral 13 identifies a strut configured to act against the rotor only at the end of the cleaning cycle to retain the rotor in place. In fact, as mentioned above, the cleaning occurs by means of the use of an adhesive tape that at the end of the cycle, moving away from the rotor, could lift it undesirably from the seat 11. Figure 5 shows a variant of the seat of Figure 4 wherein the ends of the seat do not have a single pair of rollers 12 but several pairs of rollers 12 shown at 90° to one another on a rotating head. Such an arrangement allows different sized rotors to be housed in the seat, providing different distances between the corresponding pairs of rollers 12.

Figure 6 shows in a schematic manner some components of the station of the present invention which cooperate with one another to achieve the intended object. In such a figure the following can be seen;
- the seat 11 configured to rotatably house the magnetic rotor about its axis (A) wherein the seat is translated after loading inside the station;
- a first support pin 14 having an axis (A') parallel to the axis (A) of the magnetic rotor, wherein the first support pin 14 is rotatable about its axis (A') (in both directions) and is configured to support a roll 16 of adhesive tape 17;
- a second support pin 15 having an axis (A") parallel to the axis (A') of the first support pin 14; wherein the second support pin 15 is configured to receive an initial unwinding end of the roll of adhesive tape from the first pin 14 and is rotatable about its axis (A") (in both directions) to progressively wind the adhesive tape 17 about its axis (A") during unwinding;
- a pusher device 18 configured to press the adhesive tape 17 as it passes from the first 14 and to the second support pin 15 against the magnetic rotor 1 housed in the seat 11 so that by dragging, the motion of the adhesive tape 17 commands the rotation of the magnetic rotor 1 about its axis (A) and the surface impurities on the magnetic rotor 1 migrate from the magnetic rotor 1 to the adhesive tape 17 remaining attached on the adhesive of the adhesive tape in movement.

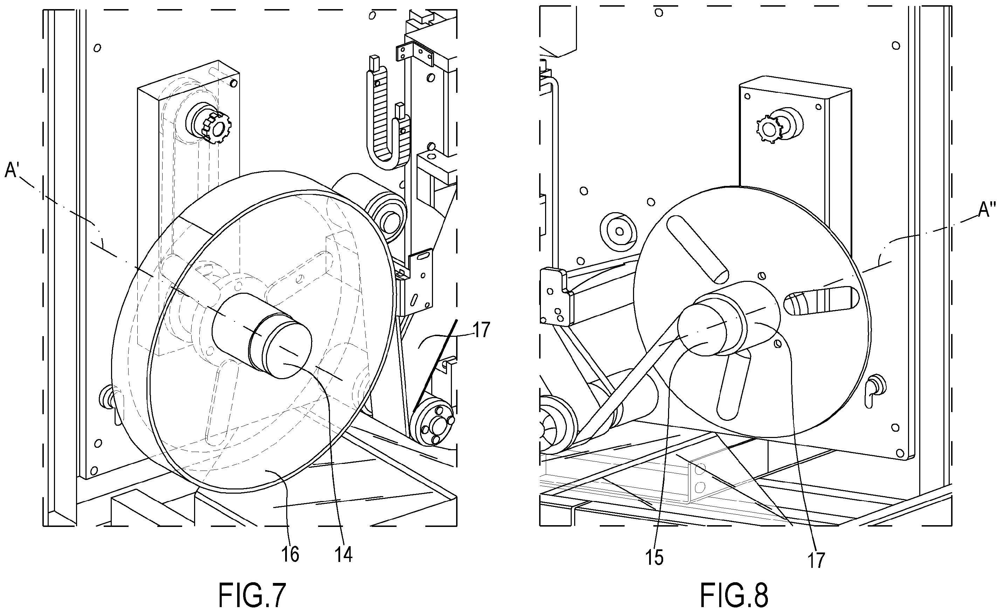

Figures 7 and 8 show the first pin 14 supporting the roll 16 and the second pin 15 coupled to the tape during the unwinding from the first pin 14. In this example of Figure 6, the pusher device comprises a pusher tape 19 deferred in a closed loop between two rollers 20 with axes parallel to the axis (A) of the magnetic rotor. The rollers are rotatable about their axes and are arranged respectively upstream and downstream of the magnetic rotor 1 so that a deflection branch of the pusher tape 19 contacts the adhesive tape 17 exiting the first pin 14 upstream of the magnetic rotor 1, presses the adhesive tape 17 against the magnetic rotor 1 and subsequently releases the adhesive tape 17 downstream of the magnetic rotor 1 towards the second pin 15.

Although not visible in Figure 6, the pusher tape is preferably mounted on a vertical hydraulic or pneumatic slide to allow cleaning rotors of different sizes and to adjust the required adhesion load between adhesive tape and rotor. Although not shown, there is at least one motorization, for example a first motor coupled to the second pin 15 configured to rotate the second pin along the winding direction of the tape on the second pin; and/or a second motor coupled to the first pin configured to rotate the first pin along the rewinding direction of the tape on the first pin; and/or
- a third motor coupled to one of the idler rollers for pusher tape configured to command the motion of the pusher tape. Finally, the station can be equipped with sensors for its control and automation, for example starting from the identification of the rotor to be cleaned by reading a special code.

The operation of the station described with reference to the previous figures can be summarised in the following steps:
- automatic selection of the cleaning program by reading the code on the rotor (optional step);
- in the seat, rotating the head of the pair of rollers corresponding to the configuration of the end of the rotor to be cleaned (if necessary);

- loading the rotor in the seat, wherein preferably the seat is in the loading position prior to its translation into the working position;
- closing the hatches of the working area after loading the adhesive tape on the first pin and connecting the free end of the tape to the second pin;
- operating the cleaning cycle with operation of the pusher device, i.e., lowering the pusher tape to bring the adhesive tape against the rotor in a controlled manner, and of the motors present for the advancement of the tape;
- cleaning the rotor possibly in steps; in fact, if the rotor has dimensions along its axis A which are greater than the size of the tape, the cleaning can occur in two steps, i.e., after cleaning a portion of the roller, the pusher tape is lifted (rotor stopped in its seat thanks to the strut), the translation of the seat along the axis A is operated and the lowering of the pusher tape is recommended to also clean the second portion of the rotor;
- at the end of the cycle, the tape is lifted (the rotor is stopped in place thanks to the strut), the seat is returned to the loading position and the clean rotor is removed.

As described above, the duration of the cleaning steps can be fixed or be determined automatically according to a device or an optical sensor that controls the progress of the cleaning in terms of impurities present on the tape after passage on the rotor.

## Claims

1. A cleaning station (6) for removing surface impurities, in particular ferrous particles, from the surface (4) of a cylindrical magnetic rotor (1) having an axis (A); wherein the cleaning station (6) comprises:
- a seat (11) configured to house the magnetic rotor (1) in a rotatable manner about its axis (A);
- a first support pin (14) having an axis (A') parallel to the axis (A) of the magnetic rotor (1) when housed in the seat (11), wherein the first support pin (14) is rotatable about its axis (A') and is configured to support a roll (16) of adhesive tape (17);
- a second support pin (15) having an axis (A") parallel to the axis (A') of the first support pin (6); wherein the second support pin (15) is configured to receive an initial unwinding end of the roll (16) of adhesive tape (17) supported on the first support pin (14) and is rotatable about its axis (A") to progressively wind the adhesive tape (17) about its axis (A") during unwinding from the first support pin (14);
- at least one motorization configured to command the unwinding of the adhesive tape (17) from the first pin (14) and the winding on the second pin (15);
- a pusher device (18) configured to press the adhesive tape (17) as it passes from the first (14) and to the second support pin (15) against the magnetic rotor (1) housed in the seat (11) so that by dragging, the motion of the adhesive tape (17) commands the rotation of the magnetic rotor (1) about its axis (A) and the surface impurities on the magnetic rotor (1) migrate from the magnetic rotor (1) to the adhesive tape (17) remaining attached on the adhesive of the adhesive tape (17).

2. The station as claimed in claim 1, wherein the pusher device comprises a closed-loop pusher tape (18) deferred between two rollers (20) having axes parallel to the axis (A) of the magnetic rotor (1) when housed in the seat (11); the rollers (20) being rotatable about their axes and being arranged respectively upstream and downstream of the magnetic rotor (1) when housed in the seat (11) so that a deflection branch of the pusher tape (18) contacts the adhesive tape (17) exiting the first pin (14) upstream of the magnetic rotor, presses the adhesive tape (17) against the magnetic rotor (1), and releases the adhesive tape (17) downstream of the magnetic rotor (1) to the second pin (15).

3. The station as claimed in claim 2, wherein the rollers (20) are toothed rollers and the pusher tape (18) is a belt.

4. The station as claimed in claim 2 or 3, wherein the at least one motorization configured to command unwinding the tape (17) from the first pin (14) and winding on the second pin (15) comprises:
- a first motor coupled to the second pin (15) configured to rotate the second pin (15) along the winding direction of the tape (17) on the second pin (15); and/or
- a second motor coupled to the first pin (14) configured to rotate the first pin (14) along the rewinding direction of the tape (17) on the first pin (14); and/or
- a third motor coupled to one of the idler rollers (20) for pusher tape (18) configured to command the motion of the pusher tape (18).

5. The station as claimed in any one of claims 2 to 4, wherein the pusher tape (18) and idler rollers (20) are housed on a movable slide relative to the housing seat (11) to vary the pressure to be exerted on the magnetic rotor (1) and to allow housing magnetic rotors (1) with different diameters in the seat (11).

6. The station according to any one of the preceding claims, wherein the seat (11) is movable along an axis that coincides with the axis (A) of the rotor (1) when it is housed in the seat (11) to provide for a first loading position of the rotor (1) wherein the seat (11) is not at the adhesive tape (17) passage area and at least two working positions wherein the adhesive tape (17) is at different portions of the magnetic rotor (1).

7. The station according to any one of the preceding claims, wherein the first pin (14) is an expansion pole to go from a first lower pining diameter of the roll (16) of adhesive tape (17) and a second larger diameter wherein it becomes integral to the roll (16) of adhesive tape (17).

8. The station as claimed in any one of the preceding claims, wherein the station comprises a self-supporting frame (7) made of paramagnetic or non-magnetic material supporting the seat (11), pins (14, 15) and pusher device (18); an electrical cabinet and electronic components located outside the frame (7) at its rear being provided.

9. The station as claimed in claim 8, wherein movable hatches (9) are provided to allow loading or replacing the roll (16) of adhesive tape on the first pin (14).

10. The station as claimed in any one of the preceding claims wherein the station comprises a device, preferably an optical device, configured to control the adhesive tape (17) coming out of the magnetic rotor (1) and configured to monitor the presence of impurities on the adhesive of the adhesive tape (17); a control unit being provided connected to the optical device so that the cleaning of the rotor (1) has a duration depending on what is monitored by the optical device.

11. The station as claimed in any one of the preceding claims, wherein the station comprises at least one sensor configured to detect the status of the unwinding of the adhesive tape (17) from the first pin (14), this sensor being connected to signaling devices for replacing the roll (16) of adhesive tape.

12. The station as claimed in claim 11, wherein the sensor detecting the status of the unwinding of the adhesive tape (17) from the first pin (14) when it reveals complete unwinding commands the rewinding of the adhesive tape (17) on the first pin (14).

13. The station as claimed in any one of the preceding claims, wherein the housing seat (11) comprises opposing receiving heads (12) of pin ends (5) of the rotor (1); the heads (12) being switchable in a plurality of configurations to house pin ends (5) of rotors (1) of different sizes.

14. The station as claimed in any one of the preceding claims, wherein the station comprises rotor (1) positioning control device in the seat (11); a control unit connected to such control device being provided so in case of incorrect positioning, or in case of positioning a rotor (1) of incorrect size for the seat (11), the operation of the station is inhibited.

15. The station as claimed in any one of the preceding claims, wherein the station comprises a locking device (13) to lock the rotor (1) in the seat (11) so that at the end of cleaning and lifting the adhesive tape (17) is prevented from lifting by dragging the rotor (1).

16. The station as claimed in any one of the preceding claims, wherein the station comprises a reader to read a code shown on the rotor (1) to be cleaned; a control unit connected to the reader being provided so that the station automatically provides its setting according to the code read by the reader.
